# EUROPÄISCHE PATENTANMELDUNG

(11) **EP 0 933 022 A2**
(43) Veröffentlichungstag der Anmeldung: **04.08.1999**
(21) Anmeldenummer: 99890030.2
(22) Anmeldetag: 29.01.1999
(51) Int. Cl.: A01K 5/02

(54) **Fütterungsanlage für Ferkel**

(30) Priorität: 29.01.1998 AT 4898
(71) Anmelder: Schauer Maschinenfabrik Gesellschaft m.b.H. & Co. KG, 4731 Prambachkirchen (AT)
(72) Erfinder: Schauer, Herbert, 4731 Prambachkirchen (AT)
(74) Vertreter: Hübscher, Heiner, Dipl.-Ing.

(57) **Zusammenfassung**

Bei einer Fütterungsanlage für Ferkel ist für jede, jeweils für die Aufnahme einer Tiergruppe bestimmten Kammer oder Stallabteilung ein langgestreckter Futtertrog (4) vorgesehen, der über einen gegen die Tiere abgeschirmten Verteiler (1) über seine Länge mit vorbereitetem Futter, insbesondere Mischfutter in vorbestimmbarer Dosierung beschickbar ist. Als Verteiler dient ein Futterwagen (1), der auf wenigstens einer Laufschiene (3) von einer Befüllstation (2) zu den verschiedenen Kammern bzw. Stallabteilungen verfahrbar ist und bei seiner Verstellung entlang des jeweiligen Futtertroges (4) das Futter über eine Austragseinrichtung in dosierten Mengen in den Futtertrog (4) fördert.

## Beschreibung

Die Erfindung betrifft eine Fütterungsanlage für Ferkel, bei der für jede, jeweils für die Aufnahme einer Tiergruppe bestimmten Kammer oder Stallabteilung ein langgestreckter Futtertrog vorgesehen ist, der über einen gegen die Tiere abgeschirmten Verteiler über seine Länge mit vorbereitetem Futter, insbesondere Mischfutter in vorbestimmbarer Dosierung beschickbar ist.

Bei derartigen Fütterungsanlagen nimmt der Futtertrog vorzugsweise die gesamte Länge einer Seitenbegrenzung der Kammer bzw. Stallabteilung für die jeweilige Tiergruppe ein, damit jedes Ferkel am Trog seinen Freßplatz findet und Rangordnungskämpfe und sonstige Raufereien bei der Futterausgabe möglichst vermieden werden. Bei einer bekannten Fütterungsanlage ist an dem einen Ende des Futtertroges ein größerer Mischbehälter ortsfest angeordnet, in dem das Mischfutter aus zugeführten Komponenten vorbereitet und dann mittels einer über die Troglänge reichenden Förderschnecke in einer entsprechenden, ebenfalls über die Troglänge reichenden Gosse verteilt wird, aus der es in den Trog gelangt. Es ist dabei auch möglich, für zwei aneinander angrenzende Kammern oder Stallabteilungen einen gemeinsamen Mischbehälter mit Förderschnecke und Gosse vorzusehen und das Futter an einen für beide Abteilungen gemeinsamen Längstrog oder auch an nebeneinander angeordnete Futtertröge für die beiden Abteilungen abzugeben. Wegen des großen Anlagenaufwandes ist es bei dieser Ausgestaltung der Fütterungsanlagen üblich, relativ große Kammern bzw. Stallabteilungen vorzusehen, die jeweils viele Tiere aufnehmen, was bedeutet, daß häufig Ferkel aus verschiedenen Würfen, die auch einige Tage Altersunterschied haben können, in der gleichen Gruppe gehalten werden. Dies bedingt Nachteile bei Rangordnungskämpfen und hat den grundsätzlichen Nachteil, daß die Tiere nicht nach den optimalen Fütterungskurven gefüttert werden können, so daß das Futter nicht hinreichend ausgenützt wird, wobei überdies die Gefahr besteht, daß sich Infektionen und sonstige Erkrankungen umso rascher ausbreiten, je größer die einzelnen Tiergruppen sind. Große Kammern bzw. Stallabteilungen setzen auch voraus, daß in einem bestehenden Stall genügend Platz für ihre Anordnung vorhanden ist.

Aufgabe der Erfindung ist die Schaffung einer Fütterungsanlage der eingangs genannten Art, die es bei vereinfachtem Gesamtaufbau ermöglicht, in mehreren, auch kleineren Kammern bzw. Stallabteilungen gehaltene Tiergruppen mit hinsichtlich der Rezeptur und Menge genau auf die Tiere dieser Tiergruppe abgestimmten und gegebenenfalls mit Medikamenten versehenem Futter zu versorgen.

Die gestellte Aufgabe wird dadurch gelöst, daß als Verteiler ein Futterwagen dient, der auf wenigstens einer Laufschiene von einer Befüllstation zu den verschiedenen Kammern bzw. Stallabteilungen verfahrbar ist und bei seiner Verstellung entlang des jeweiligen Futtertroges das Futter über wenigstens eine Austragseinrichtung in dosierten Mengen in den Futtertrog fördert.

Die Laufschienen können im Bedarfsfall auch nachträglich in einem bestehenden Stall verlegt werden, wobei die Futtertröge selbst einen einfachen Aufbau haben können, da in ihnen keine mechanisch bewegten Teile (Längsförderer) mehr notwendig sind und die gesamte Verteilerarbeit vom Futterwagen übernommen wird. Durch entsprechende Schienenführung wird es möglich, auch voneinander im Stall entfernter angeordnete Kammern oder Stallabteilungen mit dem gemeinsamen Futterwagen zu erreichen. Auch dann, wenn nur kleinere Tiergruppen in entsprechenden Kammern bzw. Stallabteilungen gehalten werden, ergibt sich wegen der einfachen Futtertröge keine wesentiiche Aufwandserhöhung. Jede Tiergruppe kann das Futter in genau vorbestimmten Mengen und genau vorherbestimmbarer Rezeptur erhalten, so daß das Futter optimal ausgenützt werden kann.

Nach einer bevorzugten Ausführung wird erfindungsgemäß eine Anlage verwendet, bei der der Futterwagen einen Vorratsbehälter mit Abteilen zur getrennten Aufnahme von an der Befüllstation zugeführten Futterbestandteilen bzw. -sorten besitzt, die Abteile mit Austragseinrichtungen versehen sind und eine Steuereinheit vorgesehen ist, die unter Ansteuerung dieser Austragseinrichtungen Rezeptur und Menge des an den Futtertrögen der einzelnen Kammern bzw. Stallabteilungen abzugebenden Mischfutters bestimmt. Die Steuereinheit kann vorzugsweise am Futterwagen angeordnet und an der Befüllstation mit dort vorhandenen Steuereinrichtungen für Zubringer, z. B. Förderleitungen gekuppelt werden, so daß sie aus den Zubringern die benötigten Komponenten für die Vorratshaltung im Wagen abrufen kann. Anschließend bestimmt die Steuereinheit, welche Kammer bzw. Stallabteilung nun vom Futterwagen angefahren wird und regelt dort auch die Futterabgabe. In anderen Fällen kann man den Vorratsbehälter des Futterwagens auch als Mischbehälter ausführen und jeweils eine Futtermischung aus in der Befüllstation abgerufenen Komponenten vorbereiten und austeilen.

Zu erwähnen ist noch, daß Futterwagen anderer Bauart für die Erzeugung sogenannter Futterstraßen vor den Standplätzen in Rinderställen an und für sich bekannt sind.

In der Zeichnung ist der Erfindungsgegenstand beispielsweise veranschaulicht. Es zeigen
- Fig. 1: das Gesamtschema einer erfindungsgemäßen Fütterunganlage und
- Fig. 2: ein Detail bei einer möglichen Schienenführung für den Futterwagen.

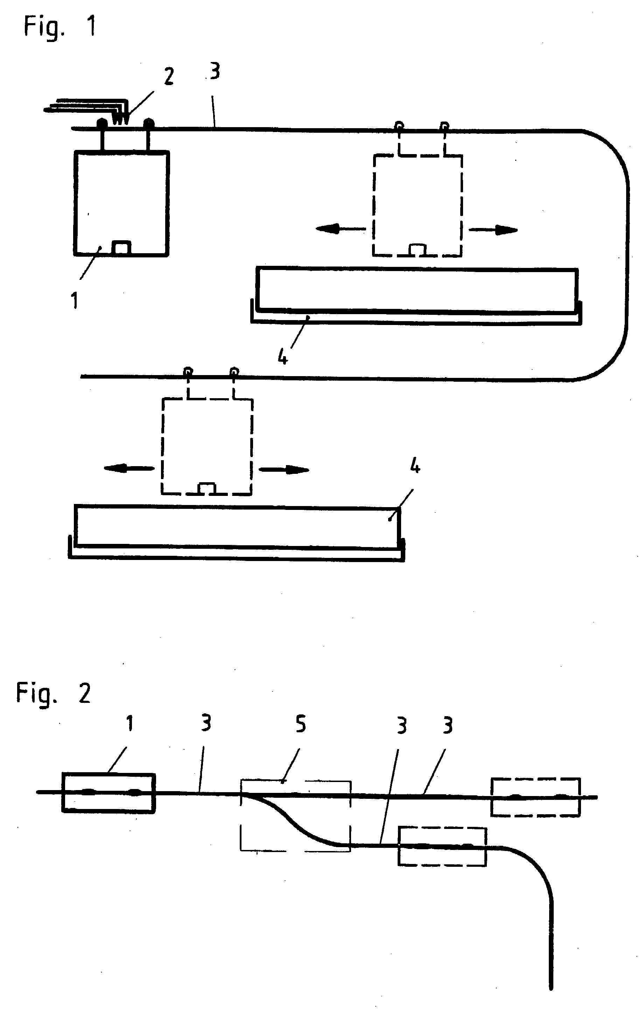

Die Anlage nach Fig. 1 besitzt einen Futterwagen 1, der Einzelabteile aufweist, die an einer Befüllstation 2 über Zubringer mit Futterbestandteilen in über eine Steuereinheit vorbestimmbaren Mengen beschickbar sind. Der Futterwagen 1 kann entlang einer Führungsschiene 3 verfahren werden. Diese Führungsschiene führt an zwei oder mehreren, je eine Tiergruppe aufnehmenden Kammern oder sonstigen Stallabteilungen vorbei, bei denen jeweils eine Begrenzungswand von einem langgestreckten Futtertrog 4 gebildet wird, der über eine an der vom jeweiligen Tieraufenthaltsraum abweisenden Außenseite angebrachte Gosse über seine gesamte Länge mit Futter beschickbar ist, wenn der Futterwagen 1 vorbeifährt. Der Futterwagen 1 wurde bei seiner Vorbeifahrt an den Futtertrögen 4 jeweils nocheinmal strichliert angedeutet. Jedes Einzelabteil des Vorratsbehälters des Futterwagens 1 ist mit einer Austragseinrichtung versehen oder kann mit einer derartigen Austragseinrichtung gekuppelt werden. Die vorgesehene Steuereinrichtung bestimmt durch Ansteuerung dieser Austragseinrichtungen die Zusammensetzung des über die Austragseinrichtungen dosiert an die Gosse des jeweiligen Futtertroges 4 abgegebenen Futters.

Wie Fig. 2 zeigt, können in den Verlauf der Führungsschiene 3 Weichen 5 eingebaut sein, so daß mit dem Futterwagen 1 verschiedene Schienenzweige befahren und damit verschiedene Futterabgabestellen an den Futtertrögen entsprechender Stallabteilungen erreicht werden können.

## Patentansprüche

1. Fütterungsanlage für Ferkel, bei der für jede, jeweils für die Aufnahme einer Tiergruppe bestimmten Kammer oder Stallabteilung ein langgestreckter Futtertrog (4) vorgesehen ist, der über einen gegen die Tiere abgeschirmten Verteiler (1) über seine Länge mit vorbereitetem Futter, insbesondere Mischfutter in vorbestimmbarer Dosierung beschickbar ist, dadurch gekennzeichnet, daß als Verteiler ein Futterwagen (1) dient, der auf wenigstens einer Laufschiene (3) von einer Befüllstation (2) zu den verschiedenen Kammern bzw. Stallabteilungen verfahrbar ist und bei seiner Verstellung entlang des jeweiligen Futtertroges (4) das Futter über wenigstens eine Austragseinrichtung in dosierten Mengen in den Futtertrog (4) fördert.

2. Fütterungsanlage nach Anspruch 1, dadurch gekennzeichnet, daß der Futterwagen (1) einen Vorratsbehälter mit Abteilen zur getrennten Aufnahme von an der Befüllstation (2) zugeführten Futterbestandteilen bzw. -sorten besitzt, die Abteile mit Austragseinrichtungen versehen sind und eine Steuereinheit vorgesehen ist, die unter Ansteuerung dieser Austragseinrichtungen Rezeptur und Menge des an den Futtertrögen (4) der einzelnen Kammern bzw. Stallabteilungen abzugebenden Mischfutters bestimmt.
